# EUROPEAN PATENT APPLICATION

(11) **EP 2 613 425 A1**
(43) Date of publication of application: **10.07.2013**
(21) Application number: 11821844.5
(22) Date of filing: 31.08.2011
(51) Int. Cl.: H02J 17/00, H02J 7/00

(54) **CHARGING UNIT AND ELECTRICAL DEVICE PROVIDED WITH SAME**

(30) Priority: 01.09.2010 JP 2010195574
(71) Applicant: Hitachi Maxell, Ltd., Ibaraki-shi Osaka 567-8567 (JP)
(72) Inventor: TAKEUCHI Kyohei, Osaka 567-8567 (JP); HASHIMOTO Masatoshi, Osaka 567-8567 (JP); TANII Keiichi, Osaka 567-8567 (JP)
(74) Representative: Zinkler, Franz
(86) International application number: PCT/JP2011/069712
(87) International publication number: WO 2012/029829

(57) **Abstract**

In a charging unit, a configuration is obtained in which power stored in a battery can be prevented from being unnecessarily consumed when a device is not being used. The charging unit (10) includes a power receiver (13) (power receiving coil) that receives power from a power feeder (2) (charger), a battery (12) that is charged with power received by the power receiver (13), a charge controller (14) that is provided between the power receiver (13) and the battery (12), and controls the battery (12), and a disconnecting section (15) (relay) that is provided between the battery (12) and the charge controller (14), and electrically disconnects the battery (12) and the charge controller (14) when the battery (12) is not being charged.

## Description

### Technical Field

The present invention relates to charging units including a battery and a charge controller that controls charging of the battery, and electrical devices including the charging unit.

### Background Art

A charging unit including a battery and a charge controller that controls charging of the battery is conventionally known. As such a charging unit, for example, as disclosed in JP 2010-34080 A, a configuration is known in which a charge circuit (charge controller) for controlling charging of the battery is provided in a device in which the battery is mounted.

Note that the above JP 2010-34080 A discloses a non-contact charging system that has a coil in each of a charger and a device. In the non-contact charging system, a magnetic field generated when a current is caused to flow through the coil in the charger is used to cause a current to flow through the coil in the device. In other words, so-called electromagnetic induction is used to charge the battery.

### Disclosure of Invention

Incidentally, in the above-described configuration in which the charge circuit is provided in the device including the battery, power stored in the battery is consumed due to a leakage current of the charge circuit and the like. As a result, when the battery is not being charged, power of the battery is unnecessarily consumed even when the device is not being used.

Therefore, it is an object of the present invention to provide a charging unit configured to be capable of reducing unnecessary consumption of power stored in a battery when a device is not being used.

A charging unit according to one embodiment of the present invention includes a power receiver configured to receive power from a power feeder, a battery configured to be charged with power received by the power receiver, a charge controller provided between the power receiver and the battery, and configured to control charging of the battery, and a disconnecting section provided between the battery and the charge controller, and configured to electrically disconnect the battery and the charge controller when the battery is not being charged (first configuration).

With this configuration, when the battery is not being charged, the disconnecting section electrically disconnects the battery and the charge controller. As a result, a current can be prevented from flowing from the battery to the charge controller. Therefore, when the battery is not being charged and a device is not being used, power in the battery in the device can be prevented from being unnecessarily consumed due to a leakage current of the charge controller.

In the first configuration, the power receiver is preferably configured to receive power from the power feeder without being in contact with the power feeder (second configuration). When the power receiver is thus configured to receive power from the power feeder without being in contact with the power feeder, the battery and the charge controller for the battery are provided in a device. Therefore, power stored in the battery may be consumed due to the leakage current of the charge controller. In such a configuration, if the first configuration is applied, power in the battery can be prevented from being unnecessarily consumed due to the leakage current of the charge controller.

Here, "not in contact with" or "in a non-contact manner" with respect to the power receiver and the power feeder means that the power receiver and the power feeder are not directly electrically connected to each other via a terminal or the like.

In the first configuration, the disconnecting section preferably includes a light emitter configured to be turned on by a current flowing through the power receiver, and a switch configured to be driven, depending on light of the light emitter, and the switch is preferably driven to electrically connect the battery and the charge controller when the light emitter is on, and electrically disconnect the battery and the charge controller when the light emitter is off (third configuration).

As a result, when a current is flowing through the power receiver, and therefore, the battery is being charged, the light emitter is on, and therefore, the switch electrically connects the charging section and the charge controller. On the other hand, when the feeding of power to the power receiver has been ended, and therefore, the battery is not being charged, a current does not flow through the power receiver, and therefore, the light emitter is turned off, so that the switch electrically disconnects the charging section and the charge controller. Therefore, when the battery is not being charged, the switch can disconnect the charging section and the charge controller. Therefore, the disconnecting section can be activated using a simple configuration without being driven and controlled using a controller or the like.

In the first configuration, the disconnecting section preferably includes a switching element, and the switching element is preferably driven to electrically connect the battery and the charge controller when a voltage of the power receiver is higher than or equal to a threshold, and electrically disconnect the battery and the charge controller when the voltage of the power receiver is lower than the threshold (fourth configuration).

In this case, when power is being fed to the power receiver, i.e., the voltage of the power receiver is higher than or equal to the threshold, the switching element electrically connects the charging section and the charge controller. On the other hand, when power is not being fed to the power receiver, i.e., the voltage of the power receiver is lower than the threshold, the switching element electrically disconnects the charging section and the charge controller. As a result, a disconnecting section having a simple configuration can be used to electrically disconnect the charging section and the charge controller when power is not being fed to the power receiver, i.e., the battery is not being charged.

In the first configuration, the disconnecting section preferably includes a diode configured to allow only current flow from the charge controller to the battery (fifth configuration). The use of such a diode can prevent a current from flowing from the battery to the charge controller. Therefore, power stored in the battery can be prevented from being unnecessarily consumed due to the leakage current of the charge controller.

In the first configuration, the battery is preferably a lithium ion cell (sixth configuration). When the battery is a lithium ion cell, a complicated charge control is required when the battery is being charged, compared to other batteries, and the charge controller is essential. Therefore, when the battery is a lithium ion cell, a leakage current occurs in the charge controller. In such a configuration, if the first configuration is applied, power in the battery can be prevented from being unnecessarily consumed due to the leakage current of the charge controller.

In the first configuration, the battery is preferably a coin cell (seventh configuration). A device that employs such a coin cell typically and mostly has a small size, and the charge controller as well as the battery is mostly provided in the device. In addition, the coin cell typically has a low battery capacity, and therefore, is significantly affected by the leakage current of the charge controller. Therefore, in such a configuration, if the first configuration is applied, power in the battery can be effectively prevented from being unnecessarily consumed due to the leakage current of the charge controller.

An electrical device according to one embodiment of the present invention includes the charging unit according to any one of the first to seventh configurations.

According to the charging unit of the embodiment of the present invention, a disconnecting section that disconnects a battery and a charge controller when the battery is not being charged, is provided between the charge controller and the battery. As a result, power in the battery can be prevented from being unnecessarily consumed due to current flow into the charge controller when the battery is not being charged.

### Brief Description of Drawings

[FIG. 1] FIG. 1 is a diagram schematically showing a configuration of a charging system including a charging unit according to a first embodiment of the present invention.
[FIG. 2] FIG. 2 is a block diagram schematically showing a configuration of a charge controller.
[FIG. 3] FIG. 3 is a time chart showing how charging is performed when primary charging is performed after preliminary charging.
[FIG. 4] FIG. 4 is a flowchart showing a charge control operation of the charge controller.
[FIG. 5] FIG. 5 is a time chart showing how charging is performed when only primary charging is performed.
[FIG. 6] FIG. 6 is a diagram schematically showing a configuration of a charging unit according to a second embodiment.
[FIG. 7] FIG. 7 is a diagram schematically showing a configuration of a charging unit according to a third embodiment.

### Description of the Invention

Embodiments of the present invention will be described in detail hereinafter with reference to the accompanying drawings. The same or like parts are indicated by the same reference characters throughout the drawings, and will not be redundantly described.

### First Embodiment

### (Overall Configuration)

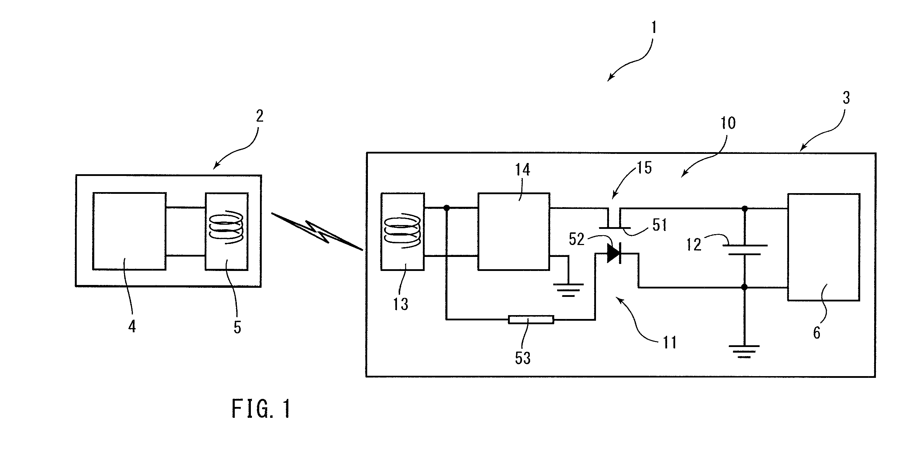

FIG. 1 is a diagram schematically showing a configuration of a charging system 1 including a charging unit 10 according to a first embodiment of the present invention. The charging system 1 includes a charger 2 (power feeder), and the charging unit 10 provided in a device 3. The charging system 1 is, for example, used as a power supply system for a compact device (the device 3, an electrical device), such as a mobile terminal (e.g., a mobile telephone, a PDA (Personal Digital Assistant), etc.), a camera, or the like.

The charging system 1 is configured to feed and receive power in a non-contact manner between the charger 2 and the charging unit 10 in the device 3. Specifically, the charger 2 includes a power feeding coil 5 connected to a power supply 4. On the other hand, the charging unit 10 includes a power receiving coil (power receiver) 13 that is a member of a charge circuit 11 connected to a battery 12. With this configuration, the charging system 1 is configured to use electromagnetic induction to supply power from the charger 2 to the charging unit 10. Here, "feed and receive power in a non-contact manner" means that power is transferred (fed and received) between two devices without involving a terminal.

Specifically, the charger 2 includes the power supply 4 connected to an external power supply (not shown), and the power feeding coil 5 electrically connected to the power supply 4. The charging unit 10 includes the charge circuit 11. The charge circuit 11 is formed by connecting the power receiving coil 13, a charge controller 14, a relay (disconnecting section) 15, and the battery 12 together using conductors. Specifically, in the charge circuit 11, both ends of the power receiving coil 13 are connected to the input side of the charge controller 14. Also in the charge circuit 11, the battery 12 is connected via the relay 15 to the output side of the charge controller 14. As a result, in the charge circuit 11, power received by the power receiving coil 13 from the charger 2 is supplied via the charge controller 14 and the relay 15 to the battery 12. Note that a load 6 of the device 3 is connected to the charge circuit 11 so that the battery 12 serves as a power supply.

Although not particularly shown, the battery 12 includes a case that is formed in the shape of, for example, a cylindrical column by combining two members, both in the shape of a cylinder and with a bottom, together. In the case, an electrode body is accommodated in which a plurality of plate-like positive and negative electrodes are alternately stacked.

The positive electrode includes a positive collector formed of metal foil such as aluminum or the like, and a positive active material layer containing a positive active material that is provided on both surfaces of the positive collector.
Specifically, the positive electrode is formed by applying, onto the positive collector formed of aluminum foil or the like, a positive electrode mixture containing a positive active material (a lithium-containing oxide capable of storing and releasing lithium ions), a conductive additive, a binder and the like, followed by drying. Preferable examples of the lithium-containing oxide used as the positive active material include lithium composite oxides, such as lithium cobalt oxides (e.g., LiCoO₂ etc.), lithium manganese oxides (e.g., LiMn₂O₄ etc.), lithium nickel oxides (e.g., LiNiO₂ etc.), and the like. Note that, as the positive active material, only one material may be used or two or more materials may be used. The positive active material is not limited to the above materials.

The negative electrode includes a negative collector formed of metal foil such as copper or the like, and a negative active material layer containing a negative active material that is provided on both surfaces of the negative collector. Specifically, the negative electrode is formed by applying, onto the negative collector 48 formed of copper foil or the like, a negative electrode mixture containing a negative active material capable of storing and releasing lithium ions, a conductive additive, a binder and the like, followed by drying. Preferable examples of the negative active material include carbon materials (e.g., graphites, pyrolytic carbons, cokes, glassy carbons, etc.) capable of storing and releasing lithium ions. The negative active material is not limited to the above materials.

Therefore, the battery 12 in this embodiment is a so-called lithium ion cell, which is charged and discharged by electrons being moved between the positive and negative electrodes via lithium ions.

Note that the positive electrodes are electrically connected to one of the members constituting the case of the battery 12. On the other hand, the negative electrodes are electrically connected to the other one of the members constituting the case of the battery 12. As a result, the electrode body in the battery 12 is electrically connected to the case of the battery 12.

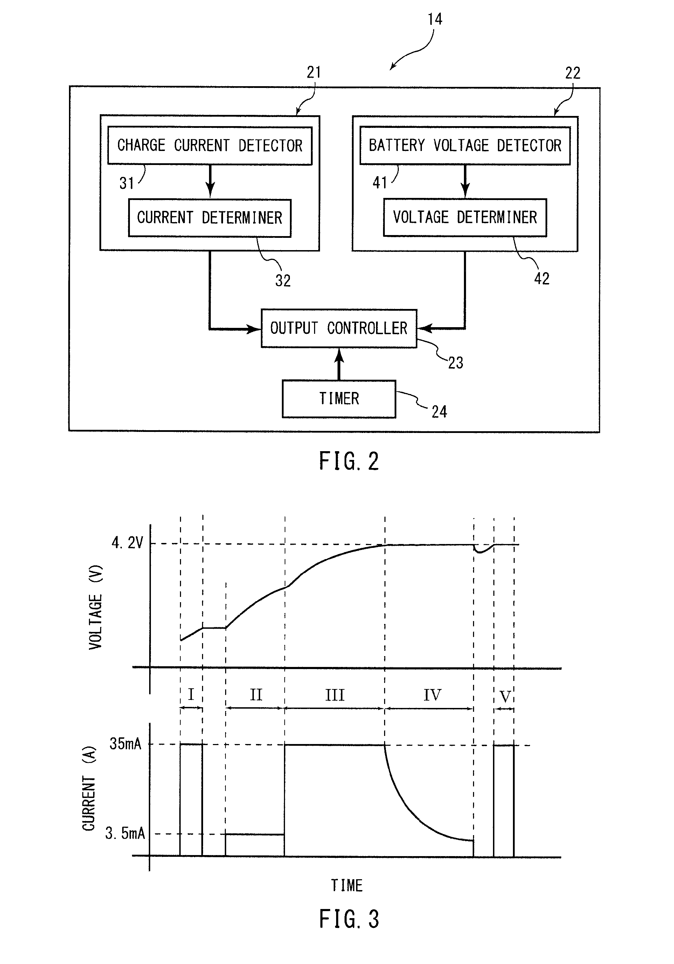

The charge controller 14 is configured to control charging of the battery 12. Specifically, as shown in FIG. 2, the charge controller 14 includes a current controller 21 for controlling a charge current, and a voltage controller 22 for controlling a charge voltage. The charge controller 14 also includes an output controller 23 that controls charging of the battery 12, depending on the outputs of the current controller 21 and the voltage controller 22. The charge controller 14 also includes a timer 24 for measuring a charge time. A detailed configuration and operation of the charge controller 14 will be described below. The charge controller 14 is configured, for example, using an IC (Integrated Circuit).

The relay 15 is configured to electrically connect or disconnect the charge controller 14 and the battery 12. Specifically, as shown in FIG. 1, the relay 15 includes a switch 51 that electrically connects or disconnects the charge circuit 11, depending on the presence or absence of incident light, and a light emitter 52 that emits light when a current flows. As specifically described below, the relay 15 electrically disconnects the charge controller 14 and the battery 12 when charging of the battery 12 is ended, so that a current does not flow through the power receiving coil 13. As a result, the power of the battery 12 can be prevented from being unnecessarily consumed due to a leakage current in the charge controller 14 after the end of charging.

### (Charge Controller)

As described above, the charge controller 14 includes the current controller 21, the voltage controller 22, the output controller 23, and the timer 24 (see FIG. 2).

The output controller 23 is configured to turn on and off charging of the battery 12 and control a current and a voltage during charging of the battery 12, depending on signals output from the current controller 21 and the voltage controller 22. Specifically, as described below, the output controller 23 is configured to detect the voltage of the battery 12, perform preliminary or primary charging, depending on the voltage, and perform constant-current charging and constant-voltage charging during the primary charging. The output controller 23 also has a function of ending charging, depending on a signal output from the timer 24.

The current controller 21 includes a charge current detector 31 and a current determiner 32. The charge current detector 31 is configured to detect a current flowing through the battery 12 during charging. The current determiner 32 compares the current detected by the charge current detector 31 with a target current to determine whether or not the detected current is equal to the target current. A signal output from the current determiner 32 is input to the output controller 23. During constant-current charging, the output controller 23 controls a current flowing through the battery 12 so that the current determiner 32 determines that the current flowing through the battery 12 is equal to the target current, i.e., the current flowing through the battery 12 is maintained constant.

The voltage controller 22 includes a battery voltage detector 41 and a voltage determiner 42. The battery voltage detector 41 is configured to detect the voltage of the battery 12. The voltage determiner 42 is configured to compare the voltage of the battery 12 with a target voltage to determine whether or not the voltage of the battery 12 is equal to the target voltage. A signal output from the voltage determiner 42 is input to the output controller 23. During constant-voltage charging, the output controller 23 controls the voltage of the battery 12 so that the voltage determiner 42 determines that the voltage of the battery 12 is equal to the target voltage, i.e., the voltage of the battery 12 is maintained constant.

The timer 24 is configured to count down a time to complete preliminary or primary charging. Specifically, the timer 24 is configured to start counting down when preliminary or primary charging starts, and output a signal when the completion time of the preliminary or primary charging is reached. The signal output from the timer 24 is input to the output controller 23. The output controller 23, when receiving the signal from the timer 24, stops the preliminary or primary charging.

FIG. 3 shows an example of how the battery 12 is charged under the control of the charge controller 14. The example of FIG. 3 shows changes in the current and voltage of the battery 12, where the voltage of the battery 12 detected by the battery voltage detector 41 is lower than a first reference voltage described below during a period I, preliminary charging is therefore performed during a period II, and primary charging is thereafter performed during periods III and IV Here, the period III is a period during which the battery 12 is charged with a constant current flowing through the battery 12 (constant-current charging). The period IV is a period during which the battery 12 is charged with a constant voltage being applied to the battery 12 (constant-voltage charging). Note that a period V is a period during which the battery 12 is recharged after the end of primary charging.

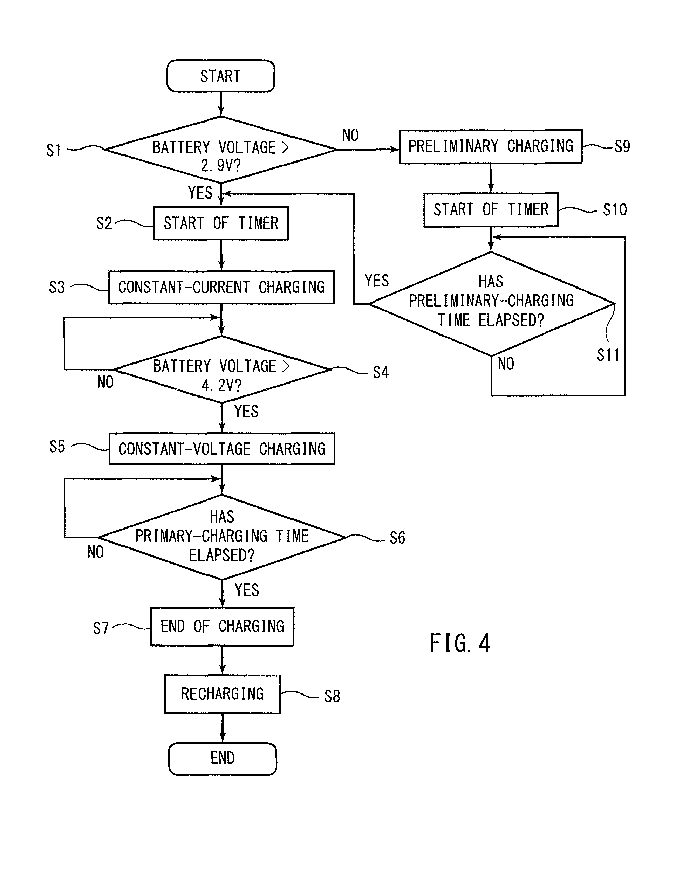

The above charge control operation performed on the battery 12 by the charge controller 14 will be described with reference to a flow shown in FIG. 4.

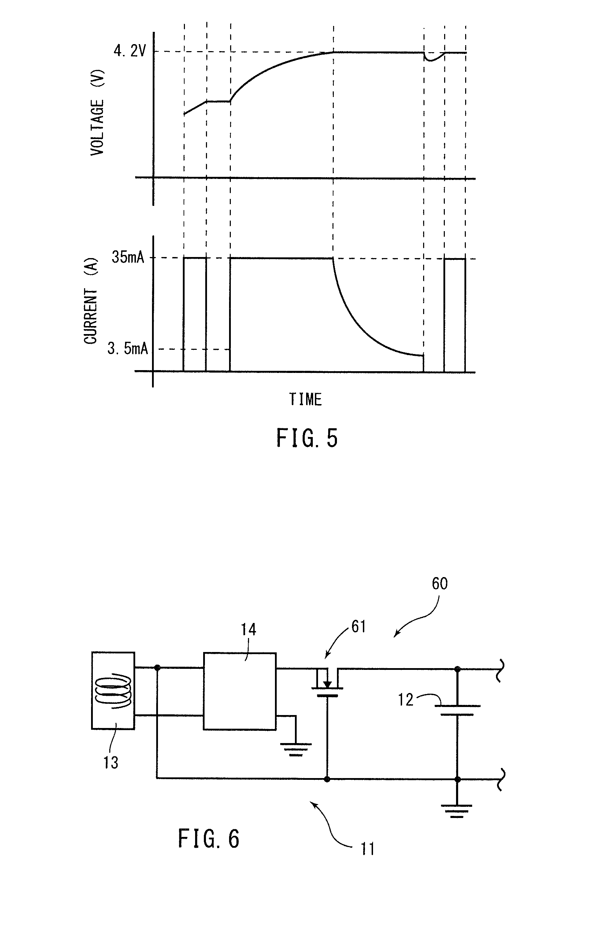

Initially, when the flow of FIG. 4 starts, in step S1 the battery voltage detector 41 detects the voltage of the battery 12, and it is determined whether or not the detected voltage is higher than the first reference voltage (2.9 V in the flow of FIG. 4). When, in step S1, it is determined that the voltage of the battery 12 is higher than the first reference voltage (YES), control proceeds to step S2 and the following steps, in which primary charging is performed. On the other hand, when it is determined that the voltage of the battery 12 is lower than or equal to the first reference voltage (NO), control proceeds to step S9 and the following steps, in which preliminary charging is performed. Note that when only primary charging is performed in step S2 and the following steps without performing preliminary charging, the voltage and current of the battery 12 change as shown in FIG. 5.

When, in step S9, preliminary charging starts, in the next step S 10 the timer 24 starts counting down (START OF TIMER). Thereafter, in step S11, it is determined whether or not the time counted down by the timer 24 has exceeded a preliminary charging time. If, in step S11, it is determined that the preliminary charging time has elapsed (YES), control proceeds to step S2. On the other hand, if, in step S11, it is determined that the preliminary charging time has not elapsed (NO), the determination of step S11 is repeatedly performed while preliminary charging is performed until, in step S11, it is determined that the preliminary charging time has elapsed.

In step S2 that is performed if, in step S1, it is determined that the voltage of the battery 12 is higher than the first reference voltage (YES) and, in step S11, it is determined that the preliminary charging time has elapsed (YES), the timer 24 starts counting down. In step S2, the timer 24 operates to measure the charge time of primary charging (primary-charging time).

Next, in step S3, the constant-current charging is performed in which the battery 12 is charged while a current flowing through the battery 12 is maintained constant. In this case, in the charge controller 14, the charge current detector 31 of the current controller 21 detects the current flowing through the battery 12, and the current determiner 32 determines whether or not the current flowing through the battery 12 is equal to the target current. Thereafter, based on the determination result of the current determiner 32, the output controller 23 of the charge controller 14 controls the current flowing through the battery 12 so that the current flowing through the battery 12 is maintained constant at the target current.

Next, in step S4, the battery voltage detector 41 detects the voltage of the battery 12, and the voltage determiner 42 determines whether or not the voltage of the battery 12 is higher than a second reference voltage (4.2 V in FIG. 4). If, in step S4, it is determined that the voltage of the battery 12 is higher than the second reference voltage (YES), control proceeds to step S5 in which the constant-voltage charging is performed. On the other hand, if, in step S4, it is determined that the voltage of the battery 12 is not higher than 4.2 V (NO), the constant-current charging is continued and the determination in step S4 is repeatedly performed until the voltage of the battery 12 becomes higher than 4.2 V

In step S5, the constant-voltage charging is performed in which the battery 12 is charged while the voltage of the battery 12 is maintained constant. In this case, in the charge controller 14, the battery voltage detector 41 of the voltage controller 22 detects the voltage of the battery 12, and the voltage determiner 42 determines whether or not the voltage of the battery 12 is equal to the target voltage. Thereafter, based on the determination result of the voltage determiner 42, the output controller 23 of the charge controller 14 controls the voltage of the battery 12 so that the voltage of the battery 12 is maintained constant at the target voltage.

Next, in step S6, it is determined whether or not the primary-charging time has elapsed, i.e., whether or not the timer 24 has output a signal indicating that the primary-charging time has elapsed. If, in step S6, it is determined that the primary-charging time has elapsed (YES), control proceeds to step S7 in which the primary charging is stopped. On the other hand, if, in step S6, it is determined that the primary-charging time has not elapsed (NO), the constant-voltage charging is continued and the determination in step S6 is repeatedly performed until the primary-charging time has elapsed.

After the primary charging is stopped in step S7, control proceeds to step S8 in which the battery 12 is recharged. The battery 12 is recharged in order to compensate for a reduction in the voltage that occurs after the end of the charging of the battery 12. To do so, after a predetermined time has elapsed since the end of the constant-voltage charging of the battery 12, the battery 12 is charged by causing a current to flow.

After the above recharging, the charging operation of the battery 12 is ended (END).

### (Relay)

As described above, the relay 15 is configured to electrically connect or disconnect the charge controller 14 and the battery 12. Specifically, as shown in FIG. 1, the relay 15 includes the switch 51 that electrically connects or disconnects the charge circuit 11, depending on the presence or absence of incident light, and the light emitter 52 that emits light to the switch 51 when a current flows through the power receiving coil 13.

The switch 51 is, for example, a phototransistor. The switch 51 is configured to be turned on when light enters the switch 51. As a result, the switch 51 is conducting in the presence of incident light, and is non-conducting in the absence of incident light. Note that the switch 51 may include a photovoltaic element that produces a voltage when light is incident upon it, and a switching element that is turned on or off, depending on a voltage output from the photovoltaic element.

The light emitter 52 is, for example, a light emitting diode. Therefore, the light emitter 52 is configured to emit light when a current flows therethrough. The light emitter 52 is also connected to the output side of the power receiving coil 13. As a result, when a current flows through the power receiving coil 13, the light emitter 52 emits light. Conversely, when a current does not flow through the power receiving coil 13, the light emitter 52 does not emit light. Note that, as shown in FIG. 1, a resistor 53 is provided between the light emitter 52 and the output side of the power receiving coil 13.

Next, an operation of the relay 15 having the above configuration will be described hereinafter.

Initially, for example, when the battery 12 is being charged by the charger 2 provided in a charging platform while the device 3 is placed on the charging platform, the power feeding coil 5 of the charger 2 causes a current to flow through the power receiving coil 13 of the charging unit 10, and therefore, the light emitter 52 of the relay 15 emits light. As a result, the switch 51 of the relay 15 is conducting, and therefore, the battery 12 is charged. Note that, as described above, the charging of the battery 12 is controlled by the charge controller 14.

When a current is continuing to flow through the power receiving coil 13, the light emitter 52 is continuing to emit light, and therefore, the switch 51 of the relay 15 is maintained in the conducting state.

Thereafter, when the device 3 is removed from the charging platform after completion of charging of the battery 12, a current does not flow through the power receiving coil 13 of the charging unit 10, and therefore, the light emitter 52 of the relay 15 stops emitting light. As a result, the switch 51 of the relay 15 is non-conducting. Therefore, the relay 15 can be used to electrically disconnect the charge controller 14 and the battery 12. Thus, when the battery 12 is not being charged, the charge controller 14 and the battery 12 are electrically disconnected, whereby power stored in the battery 12 can be prevented from being unnecessarily consumed due to a leakage current of the charge controller 14.

### (Advantages of First Embodiment)

Thus, in this embodiment, the relay 15 that electrically disconnects the charge controller 14 and the battery 12 when the battery 12 is not being charged, is provided between the charge controller 14 that controls charging of the battery 12, and the battery 12. As a result, power in the battery 12 can be prevented from being unnecessarily consumed due to the leakage current of the charge controller 14 when the battery 12 is not being charged.

Also, in this embodiment, the relay 15 includes the switch 51 that is put into the conducting or non-conducting state, depending on light, and the light emitter 52 that emits light when a current flows through the power receiving coil 13. As a result, when the battery 12 is not being charged, i.e., a current is not flowing through the power receiving coil 13, the light emitter 52 does not emit light, and therefore, the switch 51 can electrically disconnect the charge controller 14 and the battery 12. Therefore, the relay 15 does not need to be driven or controlled using a control device or the like. As a result, a simpler configuration can be used to drive and control the relay 15, and drive power is not required, and therefore, the battery 12 can be efficiently charged.

Here, if the battery 2 is a coin cell as in this embodiment, the battery capacity is typically small, and therefore, the battery 12 is significantly affected by the leakage current of the charge controller 14. To address this problem, as described above, the relay 15 is used to electrically disconnect the battery 12 and the charge controller 14 when the battery 12 is not being charged, whereby power in the battery 12 can be prevented from being significantly reduced due to the leakage current of the charge controller 14. Thus, the above configuration is effective to a battery having a small capacity, such as a coin cell or the like.

### Second Embodiment

FIG. 6 schematically shows a configuration of a charging unit 60 according to a second embodiment. The configuration of the charging unit 60 of the second embodiment is different from that of the first embodiment in that a normally-off transistor is used to electrically disconnect the charge controller 14 and the battery 12. In the second embodiment, the same parts as those of the configuration of the first embodiment are indicated by the same reference characters and will not be described, i.e., only different parts will be described hereinafter.

As shown in FIG. 6, in the charging unit 60, a transistor 61 (disconnecting section) is provided between the charge controller 14 and the battery 12. Specifically, the transistor 61 is provided between the charge controller 14 and the battery 12 so that the drain is connected to the output side of the charge controller 14 and the source is connected to the battery 12. The transistor 61 is a normally-off transistor that is off when the gate voltage is substantially 0 V In other words, the transistor 61 is on when the gate voltage is higher than or equal to the threshold. The transistor 61 is configured so that the sum of the gate leakage current and the drain cutoff current is smaller than or equal to the leakage current of the charge controller 14.

An operation of the charging unit 60 having the configuration of FIG. 6 will be described hereinafter.

For example, when the battery 12 is being charged by the charger 2 provided in a charging platform while a device is placed on the charging platform, the power feeding coil 5 of the charger 2 causes a current to flow through the power receiving coil 13 of the charging unit 60. Therefore, a drive voltage is applied to the gate of the transistor 61. As a result, the transistor 61 is put into the conducting state, so that the battery 12 is charged. Note that, as in the first embodiment, charging of the battery 12 is controlled by the charge controller 14.

The transistor 61 is maintained in the conducting state when a current is continuing to flow through the power receiving coil 13.

Thereafter, when the device is removed from the charging platform after completion of charging of the battery 12, a current does not flow through the power receiving coil 13 of the charging unit 60. As a result, the voltage applied to the gate of the transistor 61 becomes lower than the threshold, and therefore, the transistor 61 is put into the non-conducting state. Therefore, the transistor 61 can electrically disconnect the charge controller 14 and the battery 12.

Note that, in this embodiment, a field effect transistor has been illustrated as an example. The present invention is not limited to this. Any other transistors may be used that can perform a switching operation, depending on the voltage of the power receiving coil 13.

### (Advantages of Second Embodiment)

Thus, in this embodiment, the transistor 61 that is put into the conducting state when the voltage of the output side of the power receiving coil 13 is higher than or equal to the threshold, and is put into the non-conducting state when the voltage of the output side of the power receiving coil 13 is lower than the threshold, is provided between the charge controller 14 and the battery 12. As a result, when the battery 12 is charged, i.e., the power feeding coil 5 of the charger 2 causes the voltage of the output side of the power receiving coil 13 to be higher than or equal to the threshold, the transistor 61 can be put into the conducting state, so that the battery 12 can be charged. On the other hand, when the battery 12 is not charged, i.e., the voltage of the output side of the power receiving coil 13 is lower than the threshold, the transistor 61 can be put into the non-conducting state. Therefore, in the configuration of this embodiment, as in the configuration of the first embodiment, when the battery 12 is not being charged, the power stored in the battery 12 can be prevented from being unnecessarily consumed due to the leakage current of the charge controller 14.

In addition, in the configuration of this embodiment, the transistor 61 can be used to control connection and disconnection between the charge controller 14 and the battery 12, and therefore, a circuit having a simple configuration can be used to achieve the above advantages.

### Third Embodiment

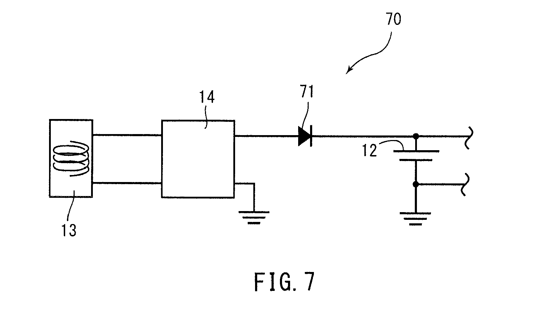

FIG. 7 schematically shows a configuration of a charging unit 70 according to a third embodiment. The configuration of the charging unit 70 of the third embodiment is different from those of the first and second embodiments in that a diode 71 is used to block current flow from the battery 12 to the charge controller 14. In the third embodiment, the same parts as those of the first and second embodiments are indicated by the same reference characters and will not be described, and only different parts will be described hereinafter.

As shown in FIG. 7, the anode side of the diode 71 (disconnecting section) is connected to the output side of the charge controller 14. The cathode side of the diode 71 is connected to the battery 12. As a result, the diode 71 allows a current to flow from the charge controller 14 to the battery 12, and blocks current flow from the battery 12 to the charge controller 14. Here, the diode 71 is configured so that a current in the reverse direction is lower than or equal to the leakage current of the charge controller 14.

Therefore, the diode 71 can be used to prevent power stored in the battery 12 from being unnecessarily consumed due to the leakage current of the charge controller 14.

Note that when a diode is used as in this embodiment, the charge controller 14 needs to be configured so that charging is performed, taking into consideration the on-state voltage drop of the diode.

### (Advantages of Third Embodiment)

Thus, according to this embodiment, the diode 71 that allows only current flow from the charge controller 14 to the battery 12 is provided between the charge controller 14 and the battery 12. As a result, the diode 71 can block current flow from the battery 12 to the charge controller 14. Therefore, power in the battery 12 can be prevented from being unnecessarily consumed due to the leakage current of the charge controller 14.

In addition, in the configuration of this embodiment, it is not necessary to drive or control a switch or the like. Therefore, a circuit having a simple configuration can be used to achieve the above advantages.

Moreover, with the above configuration, power of the battery 12 consumed by the charge controller 14 can be reduced irrespective of the conduction state of the power receiving coil 13 of the charging unit 70. In other words, even if the device is not placed far away from the charger 2, current flow from the battery 12 to the charge controller 14 can always be blocked.

### (Other Embodiment)

The embodiments of the present invention described above are only examples for carrying out the present invention. Therefore, the present invention is not limited to the above embodiments. Changes and modifications can be made to the embodiments when necessary without departing the spirit and scope of the present invention.

In the first and second embodiments, the relay 15 or the transistor 61 is driven and controlled, depending on the conduction of the power receiving coil 13. However, a switch may be manually driven. In this case, when the battery 12 is not being charged, the switch may be turned off to electrically disconnect the charge controller 14 and the battery 12.

In the first and second embodiments, when the charging unit 10, 60 is placed far away from the charger 2, so that a current does not flow through the power receiving coil 13, the relay 15 or the transistor 61 is activated to electrically disconnect the battery 12 and the charge controller 14. However, the relay 15 or the transistor 61 may be activated when power supply from the charger 2 is stopped, charging of the battery 12 is interrupted by the charge controller 14, or the like.

In each of the above embodiments, the battery is a lithium ion cell. However, any batteries other than lithium ion cells may be used if charging thereof can be controlled. The shape of the battery is not limited to a coin, and may have any other shapes, such as a cylindrical column, a rectangular solid, and the like.

In each of the above embodiments, the charging unit 10, 60, 70 is provided in the device 3. However, the charging unit 10, 60, 70 may be detachably provided in the device 3, and the charging unit 10, 60, 70 in the device 3 may be removed and charged.

In each of the above embodiments, power is transferred (fed and received) in a non-contact manner between the charger 2 and the charging unit 10. Alternatively, power may be transferred (fed and received) between the charger 2 and the charging unit 10 via a terminal.

### Industrial Applicability

The charging unit of the present invention is applicable to a configuration that includes a battery, and a charge controller that controls charging of the battery.

## Claims

1. A charging unit comprising:
a power receiver configured to receive power from a power feeder;
a battery configured to be charged with power received by the power receiver;
a charge controller provided between the power receiver and the battery, and configured to control charging of the battery; and
a disconnecting section provided between the battery and the charge controller, and configured to electrically disconnect the battery and the charge controller when the battery is not being charged.

2. The charging unit according to claim 1, wherein
the power receiver is configured to receive power from the power feeder without being in contact with the power feeder.

3. The charging unit according to claim 1, wherein
the disconnecting section includes a light emitter configured to be turned on by a current flowing through the power receiver, and a switch configured to be driven, depending on light of the light emitter, and
the switch is driven to electrically connect the battery and the charge controller when the light emitter is on, and electrically disconnect the battery and the charge controller when the light emitter is off.

4. The charging unit according to claim 1, wherein
the disconnecting section includes a switching element, and
the switching element is driven to electrically connect the battery and the charge controller when a voltage of the power receiver is higher than or equal to a threshold, and electrically disconnect the battery and the charge controller when the voltage of the power receiver is lower than the threshold.

5. The charging unit according to claim 1, wherein
the disconnecting section includes a diode configured to allow only current flow from the charge controller to the battery.

6. The charging unit according to claim 1, wherein
the battery is a lithium ion cell.

7. The charging unit according to claim 1, wherein
the battery is a coin cell.

8. An electrical device comprising:
the charging unit according to any one of claims 1 to 7.
